# EUROPEAN PATENT APPLICATION

(11) **EP 1 143 361 A1**
(43) Date of publication of application: **10.10.2001**
(21) Application number: 00201227.6
(22) Date of filing: 05.04.2000
(51) Int. Cl.: G06F 17/60

(54) **A knowledge system and methods of business alerting or analysis**

(71) Applicant: Koninklijke KPN N.V., 9726 AE Groningen (NL)
(72) Inventor: Kuiper, Wilko Juurt Jan, 9781 RC Bedum (NL)
(74) Representative: Kruk, Wiggert Johan

(57) **Abstract**

A knowledge system compiled on a computer environment or a memory carrier is disclosed. The knowledge system couples information about one or more business processes or functions to one or more software components stored in the computer environment, and the knowledge system triggers a signal about the business processes or functions towards a user interface in case of a change in the software components.

## Description

### FIELD OF THE INVENTION

The present invention is related to the field of knowledge or expert systems and to methods of business processing. More in particular a novel knowledge system and novel methods of business processing making use of knowledge relations are disclosed.

### BACKGROUND OF THE INVENTION

Knowledge or expert systems are known in the art. An example of such system is the Service Assurance Center system, commercially provided by the company BMC Software, the publicly available information about this system being incorporated herein by reference. The SA Center gives Information Technology organizations a view of:
- how services are performing;
- whether services are available at any given moment around the world; and
- how both its internal staff and external customers are using its application services.

The Service Assurance Center system is monitoring Information Technology (IT) systems including infrastructure and software application parts. This monitoring is executed by synthetic transactions wherein for example a Personal Computer is monitoring by emulating the behavior of a user. Hereby information can be gathered whether and to what extent parts of the IT systems are correctly working or are correctly emulating physical infrastructure.

### PROBLEM DEFINITION AND AIM OF THE INVENTION

The Knowledge or expert systems provide a tool for controlling and/or managing the IT systems being part of a business. The Knowledge or expert systems of the prior art however fail to correlate business processes or functions to changes or disturbances in the IT system. It is needed in the art to provide knowledge systems that provide information about the actual business processes or functions being correlated or linked to or influenced by an IT system. Thus there is a need to provide a knowledge system that communicates about the actual business processes or functions instead of about the underlying IT system.

There is a further problem in the art that the IT systems that are developed to manage or monitor the business processes or functions, are becoming more and more complex. Therefore it is difficult to analyze the impact of functional errors in parts of the IT systems on the performance of the whole IT system. Prior art solutions do not tackle this problem to a sufficient level.

### SUMMARY OF THE INVENTION

A number of aspects of the present invention is detailed herebelow ; the different aspects and the embodiments described in the detailed description and any features thereof can be combined.

In a first aspect of the present invention a knowledge system compiled on a computer environment or a memory carrier is disclosed. The knowledge system couples information about one or more business processes or functions to one or more software components stored in the computer environment, and the knowledge system triggers a signal about the business processes or functions towards a user interface in case of a change in the software components. The user interface can be part of the computer environment, but the user interface can also be external to the computer environment and be linked by a communication channel to the knowledge system. Said user interface can be a computer screen, a mobile telephone, or a flat panel or whatever user interface known to the person of skill in the art. The user interface can also include the World-Wide-Web internet or intranet infrastructure. The user interface can be available to a manager or operator or user or developer of the business processes or functions. Said memory carrier can be a floppy disk or a CD-ROM or a Digital Video Disk or whatever memory carrier known to the person of skill in the art. The software components can include all kind of Information Technology infrastructure known to the person of skill in the art, including network connections, files, database, and software applications. The software components furthermore can be coupled to the physical infrastructure on which the business processes or functions are based. The business process or functions can include for example a business process of communication such as a fixed-telephone telecommunication connection and can include the Information Technology system including the operating system and hardware of the business process, and the networkconnections of the telephone network. The business process or functions for example can also include financial processes such as investment funds management or financial transaction business processes or production installation processes such as the actual production processes in a chemical plant or for car manufacturing. Preferably the business processes or functions are integrated business process or functions with a complexity of individual business steps that are related one to the other. Thus the business processes or functions preferably are broader than setting up a one-to-one connection between an error identification in a software component and a corresponding troubleshooting message to a user interface.

The knowledge system can be used for example for the following applications :
(i)indicating which business processes or functions are influenced by a disturbance in the software components ;
(ii)indicating which business processes or functions are influenced by a functional error in the software components ;
(iii)indicating which business processes or functions are influenced by a functional error in the software components that can not directly be monitored ;
(iv)indicating which business processes or functions are influenced by an externally applied change, possibly a predetermined change for performing impact analysis, in the software components;
(v)providing information to users or operators of the business processes or functions about the availability of the business processes or functions and/or the functioning of the software components;
(vi)monitoring the business processes or functions.

The coupling of information about one or more business processes or functions to one or more software components can be done in several ways. The coupling can include a correlation between one or more business processes or functions to one or more software components and or include a straightforward link with a number of call-in procedures between one or more business processes or functions to one or more software components. At least part of the coupled information can be stored in a relational database stored on said computer environment. The relational database for example can be based on ACCESS, or can be based on database software provided by ORACLE, SYBASE, or SEQUEL SERVER or any other relational database software known to the person of skill in the art.

The knowledge system can further include or can include a link to a software component stored on said computer environment wherein information and historical data about changes that occurred in the software components is stored, together with the corresponding information about the business processes or functions.

In a second aspect of the present invention a method of monitoring or alerting about business processes or functions is disclosed. The method comprises the steps of linking information about one or more business functions or processes to one or more software components stored on a computer environment ; and providing a link to a user interface, said link being activated when at least one change is occurring in said software components.

In a third aspect of the present invention a method of analyzing one or more business functions or processes is disclosed, the method comprising the steps of linking information about the business functions or processes to one or more software components stored on a computer environment ; providing a link to a user interface ; activating said link by creating at least one change in said software components ; and monitoring the impact of said change on at least one of said business functions or processes. The step of monitoring said impact can further be executed by analyzing a signal being generated on said user interface by said link.

In a fourth aspect of the present invention, a method of analyzing one or more business functions or processes is disclosed, the method comprising the steps of linking information about the business functions or processes to one or more software components of at least two knowledge systems stored on a computer environment ; providing a link to a user interface, said link being activated when at least one change is occurring in said software components and generating a signal on a user interface ; and comparing on said user interface the signals created by at least two of the knowledge systems.

Also in another aspect of the present invention, a method of conducting business is disclosed.

A number of terms used throughout this patent application are further detailed herebelow in order to complement the understanding of the person of skill in the art of these terms. A knowledge system can also be defined as an expert system. A change in the software components can include changes of whatever nature including disfunctioning or disturbances or errors of the software components.

### BRIEF DESCRIPTION OF THE DRAWINGS

Figure 1a and 1b schematically show the architecture of an example embodiment of a knowledge system of the present invention, including additional software components.

Figure 2a shows an embodiment of the infrastructure of an example business process of fixed-telephone connections.

Figure 2b shows a number of operations being part of a business process.

Figure 3 shows an embodiment of a user interface showing geographic information about a business process.

Figure 4 schematically shows dependencies within the functionality of the NERVECENTER knowledge system according to a best mode embodiment of the invention.

### DETAILED DESCRIPTION OF THE INVENTION

For the purpose of teaching of the invention, a preferred embodiment of a knowledge system and methods of the invention are described in the sequel. It will be apparent to the person skilled in the art that other alternative and equivalent embodiments of the invention can be conceived and reduced to practice without departing form the true spirit of the invention, the scope of the invention being limited only by the appended claims.

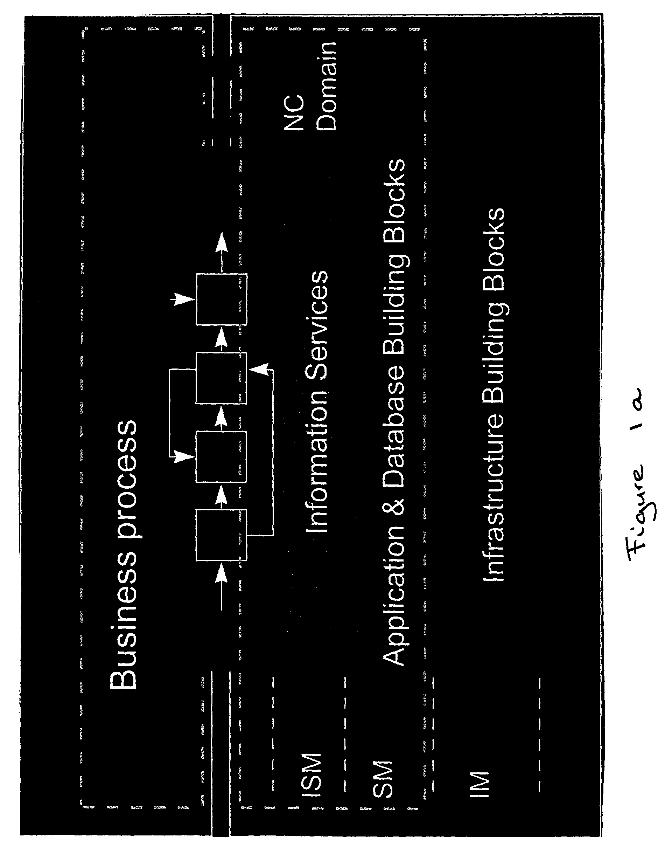

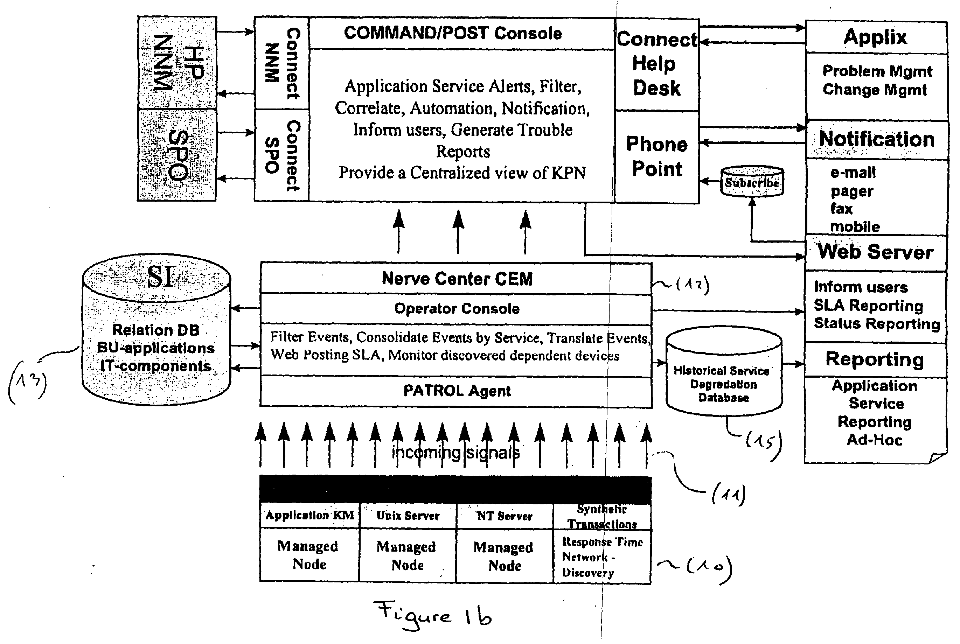

Figure 1a schematically shows the architecture of an example embodiment of a knowledge system of the present invention. Figure 1b schematically shows the architecture of an example embodiment of a knowledge system of the present invention, including additional software components. The knowledge system of the invention includes the part SI which is a relational database (13) that includes the information about the coupling or the relations between the software components and the business processes or functions. Incoming signals (11) from the software components (10) are fed to a central agent (12). The signals can include the signaling of a change or a disturbance or an error in the software components. The central agent (12) can include functionality on filtering of the incoming signals. The signals from the central agent (12) thereafter are fed to the relational database (13) . The signals can also be fed directly to the relational database (13). In the relational database, the links are available and are made between the software components (10) and the corresponding business processes or functions. Links are then automatically generated via the central agent (12) to user interfaces and a database that stores the occurrence of incoming signals (the historical service degradation database (15)). A signal is generated towards the user interfaces and the historical service degradation database. The signal is popping up on the user interface. From the user interface reports can be drawn on the business processes affected by the signaling about the change or disturbance or error in the software components and on the contents of the historical database. Further functionality that can be included in the knowledge system is functionality and smoothly integrating new software components and smoothly interfacing to other knowledge systems or other computer environments.

In the development of the relational database, there are a number of steps that can be followed. A first step includes the analysis of the business flow and the analysis of the technical (IT) components that support the business process flow. This step includes the identification of functional transactions within the business process, the documentation of possible errors and known failure points, and of known problems within the business transaction flow and the technical IT components. A next step can include the definition of the relationship and dependencies between the individual business steps or transactions within the process, and the dependencies between the individual business steps or transactions within the process and software components of the IT infrastructure supporting the business process on the other hand. The mapping of the business and IT infrastructure can include the definition of the correlation of the impact of the IT infrastructure events on the business process flow. Furthermore can be provided a definition of threshold alarm levels and alerts and the definition of data presentation formats and reporting formats. The results of these steps are stored as dependencies in a relational database and as links to separate software components and as separate software components. There can be provide further a software application that monitors the business process flow and an application that monitors the software components. The further functionality of links to a user interface and other functionalities of the knowledge system are to be provided.

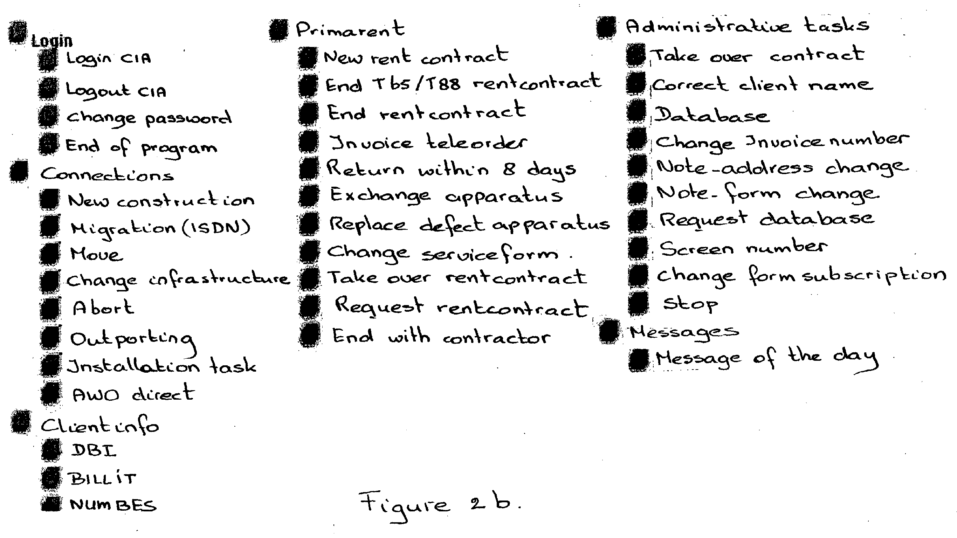

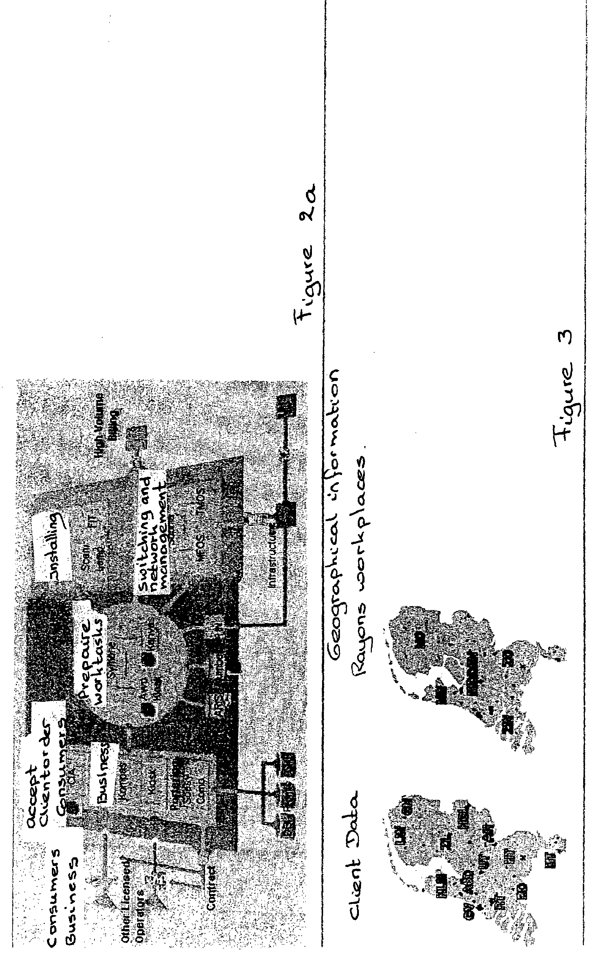

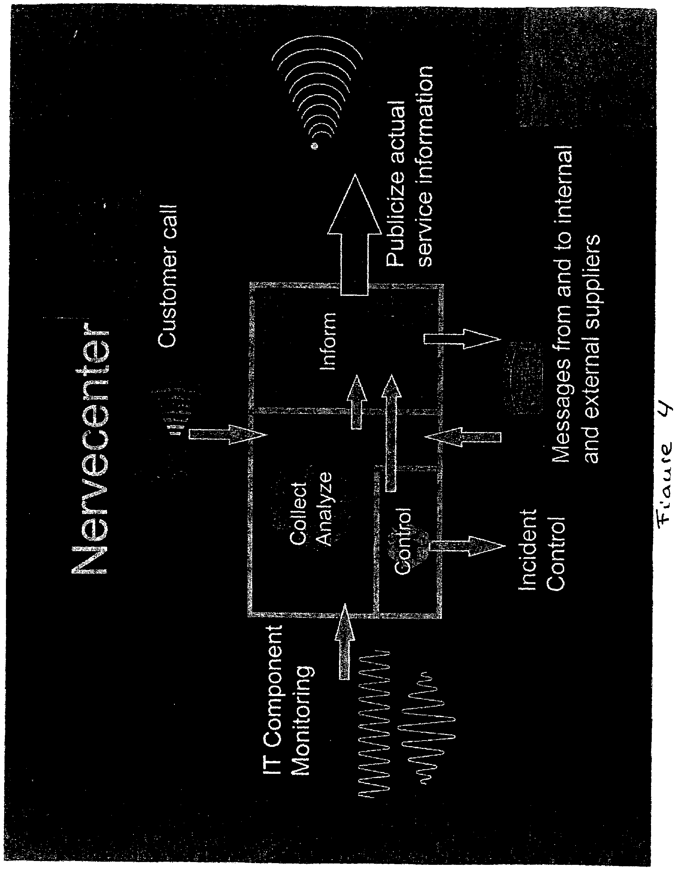

Figure 2a shows an embodiment of the infrastructure of an example business process of fixed-telephone connections. Figure 2b shows a number of operations being part of the business process. Figure 3 shows according to a best mode embodiment of the invention, a user interface showing geographic information about the business process. The business process, as stated above, is the one of the business process of fixed-telephone connections. One of the parts of this system is the CIA (Client Order Entrance Application) module. This CIA is interfacing for the entrance of client orders from the consumer market. This CIA is the first part of a chain of software components that link the client order ultimately to the switch connection orders in the telephone central units. The client orders are registered on line. The CIA has interfaces to software components shown in figure 2a including modules with client data, infrastructure data, telephone number data, rent data and billing data. For example the module KANVAS provides to the CIA information about the technical infrastructure such as cables, connections etc. . CIA provides to KANVAS the changes that are needed in the technical infrastructure for performing the client order. NUMBES for example contains a database of telephone numbers.A new number is generated and added to the database ; an operator connection is made. The CIA is a 16-bit application and can run under a WINDOWS environment on a PC such as a Fujitsu PC or a DELL PC or any similar PC known to the person of skill in the art. The CIA only contains configuration files ; data are stored in the other software components. The different interfaces are based on RPC (T-AAK) . The performance of the KANVAS systems is monitored with SYSTAR software. Performance problems of KANVAS lead to a stacking of transactions in the CIA. In order to cope with such problems a knowledge system of the invention such as the NERVECENTER software shell is to be implemented in order to provide incident control, problem control, change control, configuration management and service level management. The dependencies in the business process of fixed-telephone connections are analyzed up to the level of the software components that constitute or monitor the technical process of fixed-telephone connections. These dependencies are stored in a relational database. Scripts are coupled hereto and these scripts generate WebPages. Figure 4 schematically shows dependencies within the functionality of the NERVECENTER knowledge system according to the best mode embodiment of the invention. A prototype software in an ACCESS database is reduced to practice. An example of the add-on of the NERVECENTER software to business process of fixed-telephone connections is shown in figure 2b and 3. The geographic extension of the fixed-telephone connections over the Netherlands is shown. The non-availability of parts of the network in different parts of the Netherlands is indicated by red lights on the map of figure 3. The business steps or operations of the list of figure 2b that can not be executed, are indicated in red as well. These signals on the user interface are generated through error functions in the software components such as the KANVAS component.

## Claims

1. A knowledge system compiled on a computer environment or stored on a memory carrier, the knowledge system coupling information about one or more business processes or functions to one or more software components stored in the computer environment, and the knowledge system triggering a signal about the business processes or functions towards a user interface in case of a change in the software components.

2. The system as recited in claim 1 wherein said user interface is one of the group of a computer screen, a mobile telephone, a pager, a fax, or a panel, said screen, telephone or panel being linked to said computer environment.

3. The system as recited in claim 1 wherein said user interface is part of said computer environment.

4. The system as recited in claim 1 wherein said memory carrier is a floppy disk or a CD-ROM or a Digital Video Disk.

5. The system as recited in claim 1 wherein said coupled information is stored in a relational database stored on said computer environment.

6. The system as recited in claim 1 wherein at least one of the changes and the corresponding business functions or processes is stored on said computer environment.

7. The system as recited in claim 1 wherein said software components are coupled to physical infrastructure on which the business processes or functions are based.

8. A method of alerting about business functions or processes, the method comprising the steps of :
linking information about one or more business functions or processes to one or more software components stored on a computer environment ;
providing a link to a user interface, said link being activated when at least one change is occurring in said software components.

9. A method of analyzing one or more business functions or processes, the method comprising the steps of :
linking information about the business functions or processes to one or more software components stored on a computer environment ;
providing a link to a user interface ;
activating said link by creating at least one change in said software components ; and
monitoring the impact of said change on at least one of said business functions or processes.

10. The method as recited in claim 9 wherein said step of monitoring said impact is executed by analyzing a signal being generated on said user interface by said link.

11. A method of analyzing one or more business functions or processes, the method comprising the steps of :
linking information about the business functions or processes to one or more software components of at least two knowledge systems stored on a computer environment ;
providing a link to a user interface, said link being activated when at least one change is occurring in said software components and generating a signal on a user interface ;
comparing on said user interface the signals created by at least two of the knowledge systems.
